# EUROPÄISCHE PATENTANMELDUNG

(11) **EP 1 383 215 A1**
(43) Veröffentlichungstag der Anmeldung: **21.01.2004**
(21) Anmeldenummer: 02450160.3
(22) Anmeldetag: 18.07.2002
(51) Int. Cl.: H02G 3/32, B60R 16/02, F16L 3/23

(54) **Vorrichtung für die Befestigung von Flachleitern**

(71) Anmelder: I & T Flachleiter Produktions-Ges.m.b.h., 7000 Eisenstadt (AT)
(72) Erfinder: Eberhardt, Frank, 71254 Ditzingen (DE); Spatz, Oliver, 70193 Stuttgart (DE)
(74) Vertreter: Patentanwälte BARGER, PISO & PARTNER

(57) **Zusammenfassung**

Die Erfindung betrifft eine Vorrichtung (5) für die Befestigung von Flachleitern (4, 4'), sogenannten FFC, in Fahrzeugen und insbesondere in Automobilen.

Die Erfindung ist dadurch gekennzeichnet, dass die Befestigungsvorrichtung (5) aus einem Grundplättchen (2) und einem Deckplättchen (1) besteht, zwischen denen der bzw. die FFC zu liegen kommen, daß das Grundplättchen (2) eine Fixiervorrichtung (7) für die Fixierung am Fahrzeug aufweist und daß zumindest eines der beiden Plättchen (1, 2) zumindest zwei, in Draufsicht auf das Plättchen zumindest im wesentlichen parallel zueinander verlaufende und aus der Ebene des Plättchens in Richtung zum anderen Plättchen hin ragende, elastisch in Richtung zur Ebene des Plättchens hin deformierbare Lamellen (3) aufweist.

## Beschreibung

Die Erfindung betrifft die Befestigung von Flachleitern, sogenannten FFC, in Fahrzeugen und insbesondere in Automobilen.

Unter Flachleitern, Flachleiterkabeln oder Flachkabeln werden elektrische Leiter verstanden, bei denen die einzelnen eigentlichen metallischen Leiter im wesentlichen in einer gemeinsamen Ebene nebeneinander angeordnet sind und nicht, wie bei herkömmlichen Rundleitern, in einer räumlichen Anordnung, die gegebenenfalls noch (sogar stöchastisch) verdrillt sein kann. Derartige FFC, wie sie im folgenden in der Beschreibung und den Ansprüchen genannt werden, können entweder durch Laminieren hergestellt werden oder durch Extrudieren, dabei können die metallischen Leiter selbst einen rechteckigen oder ovalen oder auch kreisrunden Querschnitt aufweisen.

Derartige FFC werden insbesondere im Automobilbau zunehmend verwendet, da sie es im Gegensatz zu Rundleitern ermöglichen, mit Handhabungsautomaten (Robotern), statt händisch, verlegt und montiert zu werden.

Bei den bisher im Fahrzeugbau verwendeten Rundleitern war es auch bei sorgfältiger händischer Verlegung nicht möglich, die Position der einzelnen Leiter in einem Strang zueinander in definierter Lage zu halten, was aber wegen der gegenseitigen Beeinflussung der in den Leitern übertragenen Signale sehr wünschenswert wäre.

Es ermöglichen nun die FFC, dank ihrer definierten Lage der einzelnen Leiter zueinander und innerhalb des FFC, daß auch beim Führen mehrerer FFC nebeneinander (parallel zueinander) und/oder übereinander die einzelnen Leiter in genau definierter Lage zueinander verlaufen.

Zur Sicherstellung dieser Lage zueinander gibt es aber im Stand der Technik keinerlei Befestigungsvorrichtung, die eine solche Lagerung ermöglicht.

Es ist das Ziel der Erfindung, eine solche Lagerung zu schaffen, es somit zu ermöglichen, mehrere FFC am jeweils in Betracht kommenden Fahrzeugteil, insbesondere Automobilteil zu befestigen und dabei eine vorgegebene Lage der einzelnen FFC zueinander einzuhalten.

Erfindungsgemäß werden diese Ziele dadurch erreicht, daß die Befestigungsvorrichtung aus einem Grundplättchen und einem Deckplättchen besteht, daß das Grundplättchen eine Fixiervorrichtung für die Fixierung am Fahrzeugteil aufweist und daß zumindest einer der beiden Teile zumindest zwei, in Draufsicht auf das Plättchen zumindest im wesentlichen parallel zueinander verlaufenden und aus der Plättchenebene in Richtung zum anderen Plättchen hin ragender, elastisch in Richtung zur Plättchenebene hin deformierbaren Lamellen aufweist.

Die beiden Plättchen können getrennt voneinander ausgebildet und mittels einer Clipsverbindung oder ähnlichem miteinander verbindbar sein, sie können auch an einer der Randseiten, die parallel zu den Lamellen verläuft, miteinander über einen Steg od.dgl. verschwenkbar verbunden sein.

Die Lamellen können zungenförmig ausgebildet sein und nur mit einem ihrer Enden am zugeordneten Plättchen hängen, während sie mit dem anderen, aus der Plättchenebene ragenden Ende frei im Raum enden. Es ist auch möglich, die Lamellen wogenförmig auszubilden und mit beiden Enden in das Plättchen übergehen zu lassen, während der mittlere Bereich aus der Plättchenebene ragt. In der Plättchenebene bzw. der Draufsicht auf die Plättchenebene kann die Form der Lamellen spitz, rechteckig oder auch keulenförmig verdickt sein, es ist hier eine Vielzahl von Gestaltungen möglich.

Hergestellt werden können die Befestigungsvorrichtungen, bevorzugt aus Kunststoff durch Spritzgießverfahren od.ähnl.

Die Erfindung wird im folgenden an Hand der Zeichnung näher dargestellt. Dabei zeigt die
Fig. 1 eine erfindungsgemäße Befestigungsvorrichtung im Schnitt quer zur Längsachse der Flachleiter, die
Fig. 2 die Vorrichtung der Fig. 1 im Schrägriß und die
Fig. 3 einen Schnitt normal zur Schnittebene der Fig. 1 und normal zur Ebene der Flachleiter durch ein Detail der Vorrichtung der Fig. 1.

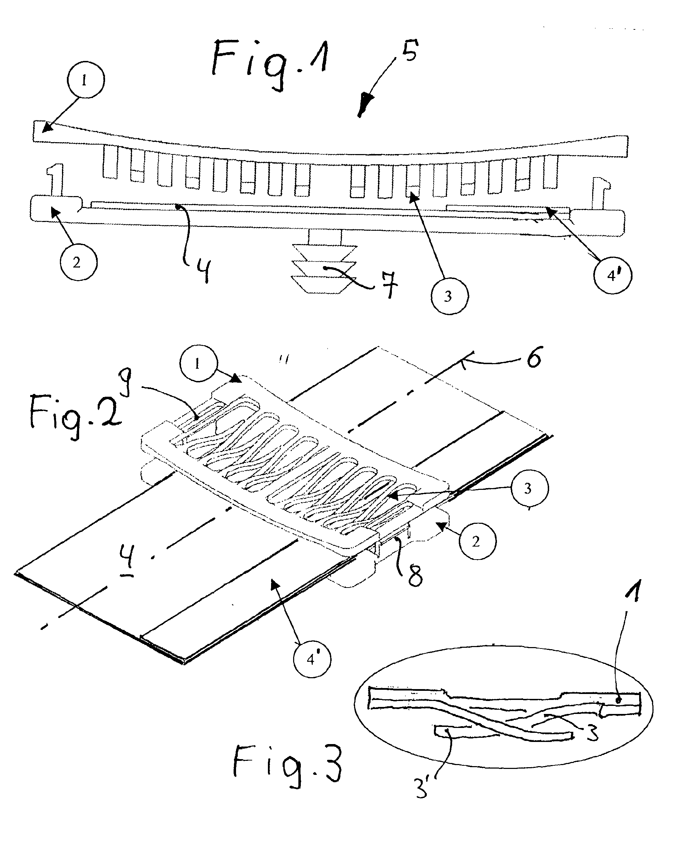

Wie insbesondere aus Fig. 2 ersichtlich ist, werden zwei, in gezeigten Beispiel parallel zueinander verlaufende Flachleiter 4, 4' mittels einer in ihrer Gesamtheit mit 5 bezeichneten Klemme zueinander fixiert. Die Klemme besteht aus einem Grundplättchen 2 und einem Deckplättchen 1, wobei das Deckplättchen 1 Lamellen 3 aufweist, die in Draufsicht im wesentlichen parallel zur Achse 6 der miteinander zu verbindenden Flachleiter 4, 4' verlaufen, dabei aber von der inneren Fläche des Deckplättchens 1 zum Grundplättchen 2 hin gerichtet sind. Im gezeigten Ausführungsbeispiel sind die freien Enden 3' der Lamellen 3 wiederum in eine Ebene parallel zur Plättchenebene gebogen.

Die Lamellen 3 sind abwechselnd zick-zack-förmig angeordnet, das heißt, dass abwechselnd die freien Enden 3' der Lamellen in die eine bzw. die entgegengesetzte Richtung ragen, wie dies insbesondere aus Fig. 3 ersichtlich ist.

Darüberhinaus ist das Grundplättchen 2 mit einer Befestigungsvorrichtung 7 zur Montage am dafür vorgesehenen Karosserieteil ausgestattet, im gezeigten Ausführungsbeispiel handelt es sich um einen seit langem bekannten pilzförmigen Vorsprung. Selbstverständlich ist es möglich, eine andere Befestigungsvorrichtung (Klammer, etc.) zu wählen oder auf sie gänzlich zu verzichten, wenn es nur notwendig ist, die Lage zweier oder mehrerer Flachleiter zueinander zu fixieren.

Im gezeigten Ausführungsbeispiel sind das Deckplättchen 1 und das Grundplättchen 2 voneinander getrennte Teile, es ist selbstverständlich möglich, die beiden Plättchen entlang einer ihrer Kanten, die parallel zur Achse 6 der Flachleiter verläuft, miteinander schwenkbar zu verbinden, sei es durch einen durchgehenden Steg, sei es durch einzelne, bandartige Verbindungen. Ein solches Plättchen kann einstückig hergestellt werden, was die damit verbundenen Vor- aber auch Nachteile mit sich bringt, es kann daher der Fachmann in Kenntnis der Erfindung leicht die für den jeweiligen Anwendungsfall beste Variante bestimmen und auswählen.

Im gezeigten Ausführungsbeispiel erfolgt die Verbindung der beiden Plättchen durch Haken 8 am Grundplättchen 2, die in entsprechend geformte Ausnehmungen 9 des Deckplättchens 1 ragen und sich dort formschlüssig fixieren. Die Verbindungsvorrichtung ist selbstverständlich außerhalb der Seitenränder 9 der FFC angeordnet, um diese nicht zu beeinträchtigen. Es ist selbstverständlich möglich, die Haken anders auszubilden, insbesondere mehrere Raststufen vorzusehen, um ein und dieselbe Vorrichtung für mehrere Lagen von Flachkabeln bestmöglich verwenden zu können, es ist auch möglich, andere Verbindungselemente vorzusehen, entweder eigene Klammern, oder pilzartige Knöpfe analog zur Befestigungsvorrichtung 7, od.dergl. mehr.

Im gezeigten Ausführungsbeispiel ist das Deckplättchen 1 konkav ausgebildet, dadurch wird durch elastische Deformation beim Schließen dem "Ausbauchen" entgegengewirkt und auch im mittleren Bereich der Vorrichtung (gegenüber dem Pilz 7) eine ausreichende Klemmkraft erreicht.

Die Erfindung ist nicht auf das dargestellte Ausführungsbeispiel beschränkt, sondern kann verschiedentlich verändert und ausgestaltet werden. So kann eine derartige Vorrichtung auch zur Befestigung eines einzigen Flachkabels an einem Karosserieteil verwendet werden, es können Farbcodes zur leichteren Erkennbarkeit sowohl der Art und Größe der Klemme als auch der verbundenen FFC's eingeführt werden, es können die inneren Oberflächen der Plättchen aufgerauht oder mit Längsfürchen/Längsrippen versehen sein, um den Halt der FFC's zu verbessern, es kann auf der Innenseite des Grundplättchens ein Klebestreifen od.dergl. aufgebracht sein, um eine regelrechte Fixierung des "untersten" FFC's zu erreichen und ähnliches mehr.

Wesentlich ist, dass eines der Plättchen Lamellen trägt, die nach Art eines Kammes oder, bevorzugt, zweier zueinander gerichteter Kämme, ausgerichtet sind und dabei aus der Ebene ihres Plättchens zum anderen Plättchen hin gerichtet sind, sodass zwischen den Plättchen liegende FFC (eines oder mehrere) durch die Lamellen im Reibschluß gehalten wird/werden.

## Patentansprüche

1. Vorrichtung für die Befestigung von Flachleitern, sogenannten FFC, in Fahrzeugen und insbesondere in Automobilen, **dadurch gekennzeichnet, dass** die Befestigungsvorrichtung (5) aus einem Grundplättchen (2) und einem Deckplättchen (1) besteht, zwischen denen der bzw. die FFC zu liegen kommen und über deren Seitenränder (9) die seitlichen Kanten der Plättchen ragen, daß das Grundplättchen (2) eine Fixiervorrichtung (7) für die Fixierung am Fahrzeug aufweist und daß zumindest eines der beiden Plättchen (1, 2) zumindest zwei, in Draufsicht auf das Plättchen zumindest im wesentlichen parallel zueinander verlaufende und aus der Ebene des Plättchens in Richtung zum anderen Plättchen hin ragende, elastisch in Richtung zur Ebene des Plättchens hin deformierbare Lamellen (3) aufweist.

2. Vorrichtung nach Anspruch 1, **dadurch gekennzeichnet, dass** die beiden Plättchen (1, 2) getrennt voneinander sind und mittels Verbindungsvorrichtungen (7, 8), die an den seitlichen Kanten der Plättchen (1, 2) angeordnet sind, die über die Seitenränder (9) des/der FFC stehen, miteinander verbunden/werden.

3. Vorrichtung nach Anspruch 2, **dadurch gekennzeichnet, dass** die Verbindungsvorrichtungen aus einem hakenförmigen Vorsprung (7) auf einem der Plättchen (1, 2) und einer Ausnehmung am anderen Plättchen (2, 1) bestehen.

4. Vorrichtung nach Anspruch 1, **dadurch gekennzeichnet, dass** die beiden Plättchen (1, 2) auf einer der Kanten, auf der sie über die Seitenränder (9) des/der FFC stehen, miteinander einstückig elastisch verbunden sind und auf der anderen der beiden Kanten mit Verbindungsvorrichtungen (7, 8), versehen sind.

5. Vorrichtung nach einem der voranstehenden Ansprüche, **dadurch gekennzeichnet, dass** die freien Enden (3') der Lamellen (3) in ihrem undeformierten, Zustand bei geschlossener Vorrichtung (5) in einer Ebene im wesentlichen parallel zur Ebene der Plättchen (1, 2) liegen.

6. Vorrichtung nach einem der voranstehenden Ansprüche, **dadurch gekennzeichnet, dass** die freien Enden (3') von Lamellen (3) in entgegengesetzte Richtung zu der anderer Lamellen ragen.
